# FASCICULE DE BREVET EUROPEEN

(11) **EP 3 831 255 B1**
(45) Date de publication et mention de la délivrance du brevet: **26.10.2022**
(21) Numéro de dépôt: 20211798.2
(22) Date de dépôt: 04.12.2020
(51) Int. Cl.: A47J 31/00, A47J 31/36

(54) **APPAREIL DE CONFECTION D'INFUSIONS**
GERÄT ZUR HERSTELLUNG VON AUFGUSSGETRÄNKEN
APPARATUS FOR BREWING INFUSIONS

(30) Priorité: 04.12.2019 FR 1913752
(43) Date de publication de la demande: 09.06.2021
(73) Titulaire: Handpresso, 77210 Avon (FR)
(72) Inventeur: LORIN, Jean-Rémi, 77300 FONTAINEBLEAU (FR)
(74) Mandataire: Cabinet Beau de Loménie

(56) Documents cités:
- EP-A1- 3 078 306
- EP-A1- 3 298 932
- EP-A1- 3 569 113
- CN-A- 105 852 646
- US-A1- 2019 343 320

## Description

### Domaine Technique

La présente invention concerne un appareil de confection d'infusions.

### Technique antérieure

Le brevet français FR 2 896 676 concerne un appareil de confection d'infusion à partir d'une charge de produit en poudre ou en dosette. L'appareil comporte un corps comprenant un moyen de pressurisation électrique ou manuel, et éventuellement un système de chauffage et une alimentation électrique adaptée. À une extrémité du corps se trouve une tête ayant un axe transversal à celui du corps et comportant un réservoir et une partie d'infusion. Un organe de manœuvre disposé le long du corps permet de faire pivoter la partie d'infusion au moyen d'un système de tringlerie.

L'appareil décrit par ce brevet présente un certain encombrement, dû au positionnement horizontal du corps d'appareil pour réaliser une infusion, et est donc peu adapté pour des environnements dans lesquels l'espace disponible est limité, tels que des habitacles de voiture, des bateaux, des motos ou des tentes.

En outre, le remplissage du réservoir et de la chambre d'infusion présente un risque de taches pour l'utilisateur et son environnement. Le document EP 3 078 306 décrit un appareil de confection d'infusion à partir d'une charge de produit dans une capsule.

Un objectif de la présente divulgation est de remédier à ces inconvénients et de proposer un appareil adapté à une utilisation nomade, simple d'utilisation et ne présentant aucun risque pour l'utilisateur même dans le cadre d'une utilisation dans un environnement confiné.

### Exposé de l'invention

Un appareil de confection d'infusions selon un premier aspect de la présente invention comporte un corps allongé selon un axe principal, le corps comprenant un réservoir et un moyen de pressurisation. L'appareil comporte une partie d'infusion comprenant une chambre d'infusion, la chambre d'infusion étant configurée pour contenir une dose de produit à infuser. L'appareil présente deux positions d'utilisation, une position de remplissage dans laquelle l'axe principal est sensiblement vertical, et un orifice de remplissage du réservoir est vers le haut, la partie d'infusion étant à distance dudit orifice de manière à permettre le remplissage du réservoir. L'appareil présente également une position d'infusion dans laquelle l'axe principal est sensiblement vertical et la partie d'infusion, fixée au corps, se trouve sous le réservoir, ferme l'orifice de remplissage du réservoir, et permet dans cette position la confection d'une infusion pendant laquelle l'infusion s'écoule par un orifice de sortie situé en dessous de la chambre d'infusion. L'appareil est agencé de telle sorte qu'une liaison hydraulique permettant l'alimentation de la chambre d'infusion par le moyen de pressurisation est réalisée lors de la fixation au corps de la partie d'infusion. Ainsi, alors qu'en position de remplissage, la partie d'infusion est à distance de l'orifice de remplissage du réservoir, et la liaison hydraulique entre la chambre d'infusion et le moyen de pressurisation est coupée, inversement l'opération de fixation (mécanique) de la partie d'infusion sous le réservoir conduit à former, ou à constituer, la liaison hydraulique entre la chambre d'infusion et le moyen de pressurisation. Plus précisément, l'opération de fixation de la partie d'infusion sous le réservoir à la fois suffit à former, mais aussi conduit nécessairement à former, ladite liaison hydraulique. Aucune action supplémentaire, en sus de la fixation mécanique de la partie d'infusion sur le réservoir, n'est nécessaire pour former la liaison hydraulique.

Un tel appareil de confection d'infusion présente une structure facilitant l'utilisation dans tout type d'environnement, même confiné, tout en permettant d'assurer une bonne qualité d'infusion. Cet avantage est dû à la structure à retournement de l'appareil, dans laquelle une première position d'utilisation permet un remplissage facilité du réservoir libéré en dégageant la partie d'infusion, et une deuxième position d'utilisation permet de réaliser l'infusion. La liaison hydraulique entre la chambre d'infusion et le moyen de pressurisation est alors réalisée conjointement à la fixation du corps à la partie d'infusion, par simple mise en correspondance des éléments hydrauliques du corps et de la partie d'infusion lors de la fixation.

Par infusion, on désigne ici toute boisson fabriquée en faisant passer un liquide chauffé au travers d'un produit à infuser. Par liquide est compris de l'eau ou n'importe quel liquide permettant de réaliser une infusion. Le produit à infuser est compris mais non limité au café, au thé ou au lait en poudre. Une dose de produit à infuser peut prendre toute forme adaptée à être contenue dans l'appareil de confection d'infusion. Le produit à infuser peut par exemple être un produit en vrac, notamment une poudre ; il peut également être conditionné, par exemple en dosette souple ou en dosette rigide.

Dans l'appareil de confection d'infusions selon la présente invention, la liaison hydraulique comprend au moins un conduit annulaire formé entre la partie d'infusion et le corps, et connecté à la chambre d'infusion.

Dans l'appareil de confection d'infusions selon le premier aspect de la présente invention, le conduit annulaire peut être circulaire dans un plan perpendiculaire à l'axe principal.

Dans l'appareil de confection d'infusions selon le premier aspect de la présente invention, le conduit annulaire peut être connecté à la chambre d'infusion par au moins un canal d'admission, notamment au moins deux canaux d'admission.

Une telle structure permet de recueillir le liquide à infuser sur un contour de la partie d'infusion, avant de l'injecter par plusieurs canaux d'admission vers la chambre d'infusion. Cela permet d'homogénéiser l'injection au sein de la chambre d'infusion, et ainsi améliorer la qualité de l'infusion.

Dans l'appareil de confection d'infusions selon le premier aspect de la présente invention, la partie d'infusion peut comprendre une jupe configurée pour enserrer un manchon formé en partie supérieure du corps contre un récipient de la partie d'infusion, le récipient étant un élément de la partie d'infusion dans lequel la partie inférieure de la chambre d'infusion est agencée et configuré pour recevoir la dose de produit à infuser.

Dans l'appareil de confection d'infusions selon le premier aspect de la présente invention, le conduit annulaire peut être agencé entre le manchon et le récipient.

Un tel mode de fixation permet d'assurer l'étanchéité de la fixation entre la partie d'infusion et le corps au niveau de l'intérieur du manchon, en ajoutant un élément additionnel de serrage sur l'extérieur du manchon.

L'appareil de confection d'infusions selon le premier aspect de la présente invention peut être configuré de telle sorte qu'en position d'infusion, le fond du réservoir est incliné et/ou une entrée du moyen de pressurisation est située sur une partie inférieure du réservoir.

Cette configuration permet d'assurer que l'intégralité de l'eau contenue dans le réservoir peut être aspirée par le moyen de pressurisation. Cela permet une utilisation plus efficace de l'eau contenue dans le réservoir, et ainsi éviter le chauffage d'une quantité d'eau plus importante que celle qui sera utilisée pour l'infusion.

Dans l'appareil de confection d'infusions selon le premier aspect de la présente invention, la partie d'infusion peut être déplaçable par rapport au corps ; et l'appareil peut être configuré de telle sorte qu'en position de remplissage, la partie d'infusion peut occuper une position dans laquelle l'orifice de remplissage du réservoir est libéré.

Une telle structure permet de libérer un large orifice de remplissage du réservoir et qui n'est pas délimité par un goulot, de sorte de faciliter l'opération de remplissage qui peut alors être réalisé sans risque de verser à côté de l'orifice ou bien de verser avec un débit trop important.

Dans l'appareil de confection d'infusions selon le premier aspect de la présente invention, le corps et la partie d'infusion peuvent être configurés pour être fixés ensemble par vissage.

Une telle structure permet d'assurer une liaison réversible pouvant aisément être défaite, tout en assurant une solidité garantissant une étanchéité nécessaire à la confection d'infusion.

Dans l'appareil de confection d'infusions selon le premier aspect de la présente invention, le dit au moins un canal d'admission a une direction sensiblement radiale par rapport à l'axe principal et inclinée vers le réservoir en allant du canal vers la chambre d'infusion.

Cette direction permet de connecter le conduit extérieur avec la chambre d'infusion située le long de l'axe principal.

L'appareil de confection d'infusions selon le premier aspect de la présente invention, peut comporter une entrée d'alimentation et/ou un logement pour un moyen de stockage d'énergie électrique, et être configuré pour fonctionner avec des basses ou très basses tensions.

Ce logement permet l'utilisation de piles ou de batteries rechargeables et pouvant être retirées, afin d'assurer l'utilisation du produit même en l'absence d'alimentation secteur ou de moyen de recharge de batterie.

Un tel appareil peut ainsi fonctionner en se branchant sur des prises secteurs de différents standards internationaux. L'appareil peut aussi être branché sur des moyens d'alimentation nomades, tels que des batteries de véhicules.

L'appareil de confection d'infusions selon le premier aspect de la présente invention peut comporter un régulateur de tension connecté au moyen de pressurisation pour assurer une pression constante lors de la pressurisation du réservoir.

En assurant une pression de fluide constante, l'infusion peut être réalisée avec un débit d'eau constant, assurant la qualité de la boisson infusée. De plus, cela permet d'éviter une pression trop forte qui risquerait de tasser la dose de produit et donc entraver l'infusion, dégradant sa qualité.

Dans l'appareil de confection d'infusions selon le premier aspect de la présente invention, la chambre d'infusion peut être détachée de la partie d'infusion.

Comme la chambre d'infusion est démontable, il est possible d'utiliser l'appareil avec plusieurs chambres d'infusion interchangeables. Ainsi, lorsque l'on doit préparer plusieurs tasses d'infusion à la suite, ces chambres d'infusions peuvent être remplies à l'avance, chacune contenant une dose de produit à infuser prête à être utilisée.

Ainsi, lors de la préparation des infusions, pour placer une nouvelle dose de produit à infuser dans la partie d'infusion, on peut remplacer la chambre d'infusion contenant la dose de produit à infuser qui vient d'être utilisée par une chambre d'infusion contenant une dose de produit à infuser prête à être utilisée.

### Brève description des dessins

La figure 1 représente une vue en perspective en coupe de l'appareil de confection de stockage.
La figure 2 représente une vue en perspective en demi-coupe partielle de l'appareil de confection d'infusion en position de remplissage.
La figure 3 représente une vue en perspective en demi-coupe d'une partie intérieure de la partie d'infusion ainsi qu'une dose de produit à infuser.
La figure 4 représente une vue en perspective en demi-coupe d'une partie extérieure de la partie d'infusion.
La figure 5 représente une vue en coupe de la partie d'infusion fixée au corps de l'appareil.

### Description des modes de réalisation

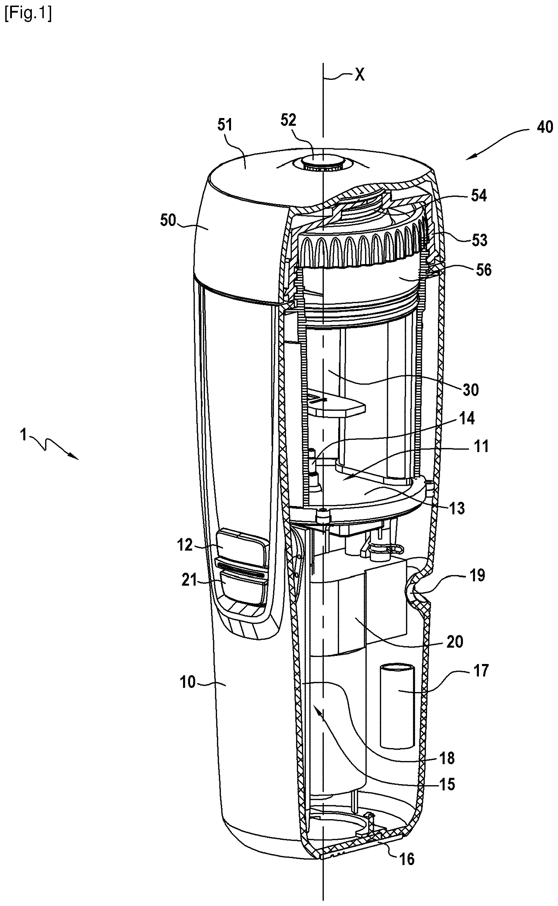

La figure 1 représente une vue en coupe d'un appareil de confection d'infusions 1, (ci-après dénommé « l'appareil »), qui constitue un exemple de mise en œuvre de la présente divulgation.

L'appareil 1 est une machine à café permettant de préparer des expressos. La dose de produit à infuser à utiliser dans cet appareil est donc une dosette de café en poudre et le liquide est de l'eau, mais l'invention est applicable à tout autre type de produits à infuser, comme expliqué précédemment.

L'appareil 1 comporte un corps 10 et une partie d'infusion 40. Sur la Figure 1, l'appareil 1 est représenté en position de stockage. Dans cette position, l'axe X aussi appelé axe principal X du corps 10 est vertical, et la partie d'infusion 40 est fixée au corps 10 se trouve au-dessus de celui-ci. Sauf indication contraire, les indications 'supérieure', 'inférieure', 'haut', 'bas' font référence à cette position de l'appareil.

Le corps 10, qui est de forme allongée selon l'axe X, comprend un réservoir chauffant 30, un moyen de pressurisation 20 et un système de commande électronique 15.

Le réservoir chauffant 30 sert à contenir l'eau nécessaire à la préparation du café, et à chauffer celle-ci à l'aide d'un système de chauffage 11, afin de porter l'eau qu'il contient à la température nécessaire pour la préparation du café (soit 95°C environ).

Le moyen de pressurisation 20, qui comprend principalement une pompe, sert à mettre sous pression l'eau chauffée et à pomper une certaine quantité d'eau de manière à la faire passer à travers la dose de café, afin de réaliser la quantité de café souhaitée, de manière connue en soi.

Le système de commande électronique15 sert à commander les opérations de préparation du café. Dans ce but, il comporte deux boutons de commande, disposés sur la surface extérieure du corps 10 : un bouton de commande de chauffage 12, permettant de déclencher le chauffage de l'eau contenue dans le réservoir, et un bouton de commande d'infusion 21, permettant de déclencher la préparation du café.

L'appareil 1 comprend également un logement 17 pour un moyen de stockage électrique tel qu'une batterie, ainsi qu'une entrée d'alimentation électrique 19 située en partie inférieure du corps 10 ou sur un côté du corps 10. Cette entrée d'alimentation électrique 19 permet par exemple de connecter l'appareil 1 à des alimentations de basses (entre 50 V et 1000 V en courant alternatif, entre 120 V et 1500 V en courant continu) et très basses tensions (moins de 50 V en courant alternatif, moins de 120 V en courant continu), par exemple une prise secteur à 120, 220V ou 230V, ou une batterie de véhicule de 12 V ou 24 V au moyen d'une prise USB, allume-cigare ou autre. L'appareil 1 peut aussi être réalisé pour ne comporter que l'un parmi le logement 17 pour moyen de stockage et l'entrée d'alimentation électrique 19.

L'appareil de plus comporte un régulateur de tension 18, connecté au moyen de pressurisation 20 et permettant d'alimenter le moyen de pressurisation 20 avec une tension constante, et ainsi assurer une pression constante lors de la pressurisation du réservoir 30 au cours de la préparation de l'infusion. Le régulateur de tension 18 peut aussi être inclus dans le système de commande électronique 15, comme représenté sur la figure 1.

La forme oblongue de l'appareil 1 ainsi que son diamètre permettent aisément de l'intégrer dans un porte-gobelet de véhicule. Par exemple, l'appareil 1 a un diamètre maximum de 100 mm sur la totalité de l'appareil 1, ou bien seulement une partie inférieure de l'appareil. Cela permet le stockage de l'appareil par exemple dans une voiture ou un train, et permet de faciliter les opérations de préparation d'infusion en libérant les mains de l'utilisateur.

Tout ou partie du réservoir 30 peut être formé d'une ou plusieurs couches isolantes, par exemple en disposant une couche de quasi-vide entre deux couches de matériaux sur le modèle d'un vase Dewar.

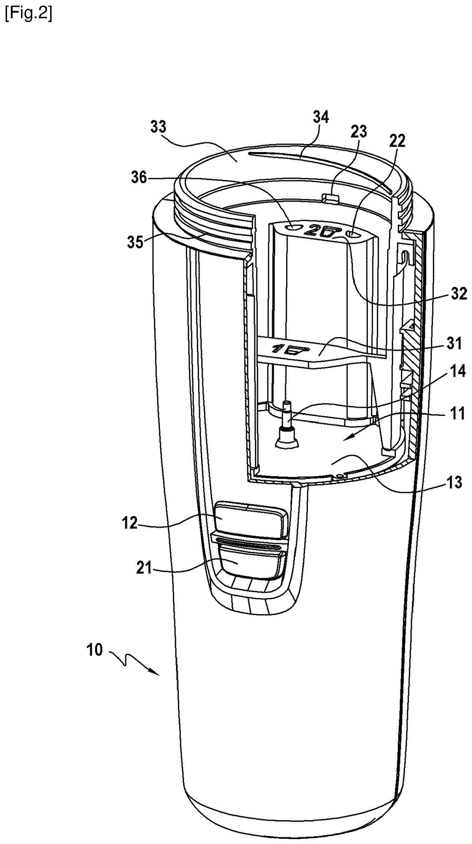

La figure 2 représente une vue en coupe de l'appareil 1 d'infusion en position de remplissage. Dans cette position, le corps 10 a la même position qu'en position de stockage, mais la partie d'infusion 40 a été retirée afin de libérer l'orifice de remplissage du réservoir 30.

Dans ce mode de réalisation, la partie d'infusion 40 est ainsi placée à distance du réservoir en étant complètement séparée du corps 10. Naturellement, la présente divulgation peut également être mise en œuvre simplement en écartant (en plaçant à distance) la partie d'infusion de l'orifice du réservoir, sans détacher la partie d'infusion 40 du corps 10.

Comme on le voit sur la figure 2, la partie supérieure du corps 10 forme un manchon de fixation 33. Ce manchon 33 est agencé en haut du réservoir 30 sous forme d'une extension de forme cylindrique d'axe X, pour permettre d'y fixer la partie d'infusion 40. Dans ce but, le manchon 33 comprend des organes d'accrochage 34 sous forme d'un filetage intérieur et des organes d'accrochage 35 sous forme d'un filetage extérieur. Ces organes d'accrochage, coopérant avec des organes de fixation correspondants agencés sur la partie d'infusion 40, permettent de fixer solidement la partie d'infusion 40 sur le corps 10.

Cette fixation n'est pas limitée au vissage, et peut être réalisée par tout autre type de fixation équivalent, comme une fixation baïonnette, par emboîtage élastique ou tout autre moyen de fixation réversible adéquat.

Le réservoir 30 consiste en une cavité de grand volume au sein du corps 10, prévue pour contenir suffisamment de liquide pour réaliser une ou plusieurs tasses de café. La partie d'infusion 40 peut être placée à distance de l'orifice d'emplissage du réservoir 30, et notamment est détachable de la partie supérieure du réservoir 30, dans le but d'offrir un large orifice de remplissage sans goulot d'étranglement, par exemple de section supérieure à 50%, de préférence 75%, de la surface maximale d'une section horizontale du corps 10 perpendiculaire à l'axe X. Cela permet à l'utilisateur de procéder aisément au remplissage du réservoir 30, par exemple en versant de l'eau à partir d'une bouteille ou d'une gourde ne disposant pas de bec de versage précis et donc de limiter le risque de salissure.

Le système de chauffage 11 comprend principalement un élément chauffant 13 sous forme d'une résistance chauffante, une sonde de température 14 et un système électronique 15. La résistance chauffante 13 permet de chauffer l'eau contenue dans le réservoir 30, et la température est mesurée par la sonde de température 14. La résistance chauffante 13 et la sonde de température 14 sont

disposées sur une partie inférieure du réservoir 30 lorsque l'appareil 1 est en position de remplissage afin d'assurer les opérations de mesure de température et de chauffage pour tout niveau de remplissage du réservoir 30.

Le système électronique 15 permet de recevoir les instructions de pressurisation et de chauffage générées par le bouton de commande de pressurisation 21 et le bouton de commande de chauffage 12, et permet de commander le système de chauffage 11 et les moyens de pressurisation 20. L'instruction de température peut être prédéterminée, par exemple élever la température de l'eau contenue dans le réservoir 30 à une température en mémoire du système électronique 15, ou bien élever la température de l'eau contenue dans le réservoir 30 à une température définie par l'utilisateur, par exemple au moyen d'un affichage digital et d'une molette de sélection. Un tel contrôle permet de déterminer avec précision la température d'infusion, ce qui permet à l'appareil 1 d'être polyvalent en optimisant la qualité d'infusion de boissons diverses, par exemple du café ou du thé; et d'optimiser la consommation électrique d'un système nomade.

Le réservoir 30 comprend une valve d'entrée d'air 36 permettant de réguler la pression à l'intérieur du réservoir fermé, notamment lors de la mise en fonctionnement du moyen de pressurisation. Cette valve d'entrée d'air 36 comporte en outre un clapet anti-retour permettant le passage de l'air tout en empêchant la sortie du liquide du réservoir 30.

Le réservoir 30 contient également des indicateurs de niveau de remplissage, par exemple indiquant des niveaux correspondant pour un indicateur de premier niveau de remplissage 31 à un café expresso de 50 mL, et pour un indicateur de deuxième niveau de remplissage 32 à deux expressos de 50 mL ou un café long de 100 mL. Grâce à la large ouverture de remplissage, ces indicateurs de niveau de remplissage sont facilement visibles depuis l'orifice de remplissage par l'utilisateur qui peut ainsi contrôler précisément le niveau de remplissage et assurer une infusion complète et non diluée, ainsi qu'optimiser la consommation énergétique en évitant de chauffer du liquide qui ne sera pas utilisé pour la boisson. Les indicateurs niveaux de remplissage peuvent être détachables afin de faciliter une opération de maintenance ou de nettoyage du réservoir 30. Du fait de la large ouverture de remplissage, les indicateurs de niveau de remplissage peuvent être disposés de sorte de masquer tout ou partie du système de chauffage 11 et ainsi améliorer l'esthétique du produit. Par exemple, un indicateur de premier niveau de remplissage 31 peut masquer une admission du moyen de pressurisation 22, et un indicateur de deuxième niveau de remplissage 32 peut masquer une sonde de température 14.

La partie d'infusion 40 comprend un couvercle 50, une jupe 53 et un récipient 56.

Une partie de préhension 48 est formée sur la surface extérieure (ou sur une partie de cette surface) du récipient 56. Cette partie de préhension 48 permet de faciliter l'opération de fixation et de désassemblage de la partie d'infusion 40 au corps 10. Par exemple, la partie de préhension 48 peut n'être formée qu'aux points d'appui des doigts de l'utilisateur. Cette partie de préhension 48 peut être alors réalisée par des rugosités comme des stries ou des cannelures, ou bien par l'utilisation d'un matériau différent de la partie d'infusion 40 ayant des propriétés antidérapantes, par exemple un caoutchouc.

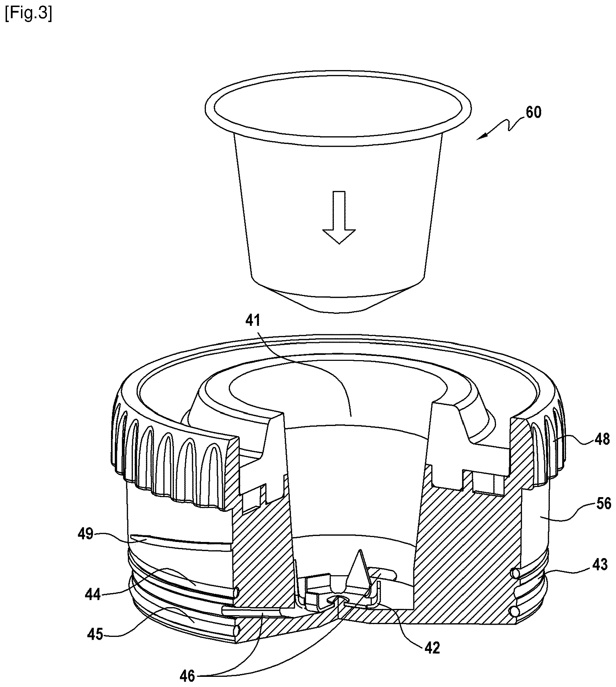

La figure 3 représente une vue en coupe de la partie d'infusion 40 ainsi que de la dose 60 de produit à infuser. La partie d'infusion 40 est de forme sensiblement cylindrique, de dimensions permettant de s'adapter aux dimensions du corps 10. La surface extérieure de la partie d'infusion 40 comporte un organe d'accrochage 49 sous forme d'une rainure, d'un filetage ou de tout moyen de fixation complémentaire de celui présent sur la partie supérieure du corps 10. La partie d'infusion 40 peut ainsi être fixée de façon réversible au corps 10.

L'intérieur du récipient 56 est creux et constitue la chambre d'infusion 41, qui permet de recevoir une dose 60 de produit. Ce produit peut se trouver sous la forme d'une poudre ou d'une dosette solide de format standardisé et connu de l'homme de métier. Ainsi, cette chambre d'infusion 41 peut être de forme adaptée pour recevoir un ou plusieurs formats de dosette, par exemple de forme sensiblement tronconique, dont l'ouverture est plus large que la base afin de permettre l'insertion et le retrait de la dosette.

La partie inférieure du récipient 56 comporte des organes de perçage 42 sous forme de pointes, afin de percer la dosette lorsque celle-ci est intégrée dans la chambre d'infusion 41. Un tel système est également adapté à recevoir une dose sous forme de poudre. Toutefois, pour faciliter le changement de dose et le nettoyage de la chambre d'infusion 41, la chambre d'infusion 41 peut être un élément détachable de la partie d'infusion 40 et plus particulièrement du récipient 56, et plusieurs chambres d'infusion 41 différentes peuvent être utilisées par exemple pour disposer de chambres d'infusion 41 avec et d'autres sans organes de perçage 42, ou bien pour permettre à l'utilisateur de préparer à l'avance plusieurs doses et n'avoir qu'à interchanger les chambres d'infusion 41, limitant ainsi limiter le nombre de manipulations à effectuer pour réaliser plusieurs boissons successives. La partie d'infusion 40 est détachable du corps 10 au niveau du récipient 56, de sorte qu'il est aussi possible d'interchanger des parties d'infusions 40 pour faciliter le changement de dose et le nettoyage de la partie d'infusion 40.

La partie supérieure de la partie d'infusion 40 contient une gouttière sur son contour. Cela permet, en recueillant les éventuelles doses de produit qui peuvent être versées hors de la chambre d'infusion 41, d'éviter les salissures dans le cadre d'une utilisation nomade ou non.

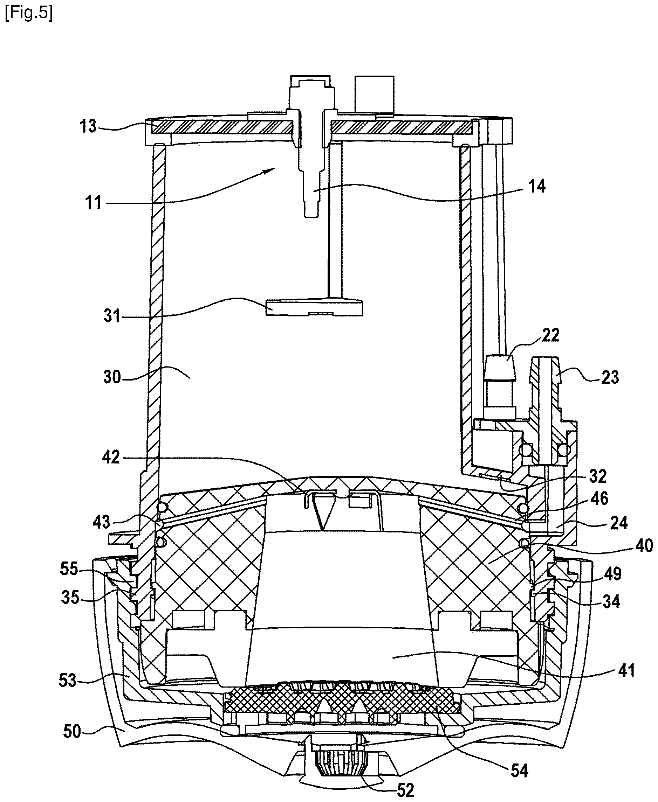

Un contour de la partie d'infusion 40 présente une rainure circulaire dans un plan perpendiculaire à l'axe principal X, et qui forme un conduit annulaire 43 avec une surface antagoniste du corps 10 lorsque la partie d'infusion 40 est montée sur le corps 10, comme dans la Figure 5. Ce conduit annulaire 43 permet de recueillir le liquide provenant du moyen de pressurisation, et communique avec la chambre d'infusion 41 au moyen d'un ou plusieurs canaux d'admission 46 disposés sur un contour de la partie d'infusion 40, par exemple deux ou quatre canaux régulièrement espacés sur le contour. Cela permet une injection homogène du liquide dans la chambre d'infusion 41, et assurer une bonne qualité d'infusion.

Dans un autre mode de réalisation, le conduit annulaire 43 est formé entre deux surfaces antagonistes de la partie d'infusion 40 et du manchon 33 du corps 10, au moyen d'une rainure formée sur le corps 10, ou sur le corps 10 et la partie d'infusion 40. De plus, ce conduit annulaire 43 peut n'être formé que sur une partie de contour. Ces canaux d'admission 46 sont radiaux, allant du conduit annulaire 43, situé à l'extérieur de la partie d'infusion 40, vers la chambre d'infusion 41, à l'intérieur de la partie d'infusion 40. Une autre forme peut être également envisagée, comme une forme légèrement courbe ou toute autre forme connue de l'homme de métier pouvant limiter les pertes de charge du liquide sous pression prévu pour l'infusion, ainsi que faciliter un procédé de fabrication, par exemple moulage par injection.

La conduit annulaire 43 est délimité par deux joints d'étanchéité sur un contour de la partie d'infusion 40. Un joint d'étanchéité à l'air libre 44 permettant d'assurer l'étanchéité entre le liquide pressurisé du canal d'admission 46 et l'air, et un élément d'étanchéité du réservoir 45 permet d'assurer l'étanchéité entre le liquide pressurisé dans le canal d'admission 46 et le réservoir 30. Ces éléments d'étanchéité sont de forme sensiblement torique et constitués chacun d'un caoutchouc disposé sur tout un contour intérieur du corps 10 de l'appareil 1 ou un contour extérieur de la partie d'infusion 40.

Les éléments d'étanchéité toriques sont de dimensions sensiblement identiques. Dans un tel cas, et avec une surface antagoniste du corps 10 complémentaire à la surface de fixation de la partie d'infusion 40, la course de l'élément d'étanchéité du réservoir 45 dans le corps 10 lors des opérations d'insertion et détachement serait supérieure. De fait, l'usure de l'élément d'étanchéité du réservoir 45 due au contact avec le corps 10 serait plus importante. Dans un tel cas, non seulement la durée de vie serait réduite, mais l'effort de serrage serait inégal, d'où un risque de fuite par la partie inférieure alors que l'état apparent du joint d'étanchéité est bon.

Pour résoudre ce problème, l'élément d'étanchéité du réservoir 45 est conçu pour être de longueur légèrement inférieure dans une structure d'étanchéité « en escalier », et ainsi s'intégrer sur un contour de la partie d'infusion 40 de plus faible circonférence. Ainsi, et en concevant en conséquence la surface antagoniste du corps 10 de forme sensiblement tronconique, la course du joint inférieur sera inchangée, mais le contact sera réduit voire supprimé tant que la partie d'infusion 40 ne sera pas complètement insérée. En concevant le système d'attache réversible en conséquence, par exemple au moyen d'une fixation baïonnette ou vissage, la partie de fixation est correctement alignée avec le corps 10 tout le long de l'opération de fixation et le contact est assuré en fin de course. De plus, assurer le contact des parties d'étanchéité uniquement en fin de course permet d'éviter de comprimer l'air à l'insertion ou de détendre l'air au retrait, ce qui nécessiterait un effort supplémentaire de la part de l'utilisateur.

Dans un autre mode de réalisation, le canal ainsi que les éléments d'étanchéité ne sont pas disposés sur un contour extérieur de la partie d'infusion 40, mais sur une partie inférieure, c'est-à-dire sur un même plan perpendiculaire à l'axe du corps 10. Une telle configuration présente l'avantage d'assurer une meilleure uniformisation des efforts de serrage et donc une meilleure étanchéité.

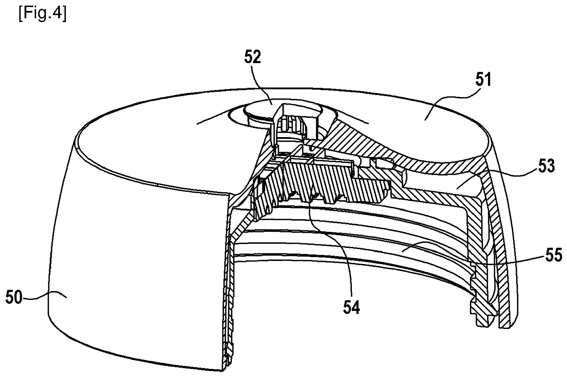

La figure 4 représente une vue en coupe d'une partie supérieure de l'appareil, configurée pour être connectée à la partie d'infusion 40. Cette partie supérieure est en deux parties : le couvercle 50 est la partie supérieure ou extérieure, de forme adaptée pour conférer au produit un aspect monobloc lorsqu'assemblé, et la fermeture 53 est la partie inférieure ou intérieure, adaptée être fixée à la partie d'infusion 40, par exemple en vissant au moyen d'un organe d'accrochage 55, à l'intérieur de la fermeture 53, avec l'organe d'accrochage 35 du manchon 33 du réservoir. Le couvercle 50 et la fermeture 53 peuvent être aisément détachées l'une de l'autre et du récipient 56 afin d'assurer les opérations de nettoyage de l'appareil 1. Dans un autre mode de réalisation, ces parties peuvent être réalisées par une seule pièce, mais la structure en deux parties détachables permet une plus grande liberté de conception, permet de faciliter les opérations de maintenance et de nettoyage, et permet de réduire l'utilisation de matière de la fermeture 53 afin de limiter l'impact environnemental du produit et limiter le coût pour le consommateur.

La partie intérieure du couvercle 50 comporte un filtre 54 sous forme d'une grille de dimension sensiblement correspondante avec l'ouverture de la chambre d'infusion 41 lorsque l'appareil 1 est assemblé. Cette grille permet de laisser passer le produit infusé, et peut comporter des picots afin de perforer une deuxième extrémité de la dosette 60 par laquelle le produit infuser s'écoule. Le maillage de la grille est conçu pour ne laisser passer que la boisson infusée, et retenir les particules de produit telles que du thé infusé ou du marc de café. La grille peut être détachable afin d'être nettoyée, et éventuellement remplacée par une grille de maillage de finesse différente et adaptée à un autre type de boisson.

Dans le prolongement de la grille, l'extérieur du couvercle 50 comporte un orifice de sortie de la boisson infusée. Cet orifice de sortie 52 peut prendre la forme d'un simple trou communiquant avec la chambre d'infusion 41, ou bien d'une buse de sortie 52 formée ayant une ouverture annulaire communiquant avant la chambre d'infusion 41. Une ouverture de forme annulaire permet d'améliorer le brassage de l'infusion afin de réaliser une mousse recherchée des amateurs de café, et limiter les projections lors de l'infusion.

Le couvercle 50 présente une gouttière 51 sous forme d'un creux afin de récolter un liquide infusé résiduel. Par exemple, ce creux peut avoir une forme sensiblement conique autour de l'orifice de sortie 52. En plus, ou en remplacement de ce creux, une gouttière 51 de forme annulaire peut être formée sur un contour de l'orifice de sortie 52.

La gouttière 51 permet de limiter l'écoulement latéral de la boisson infusée lorsque l'appareil 1 est reposé avec la partie d'infusion 40 vers le haut. Cela est particulièrement avantageux lors d'une utilisation nomade dans lequel l'utilisateur cherche absolument à éviter un écoulement de boisson éventuellement brûlante et salissante sur lui-même ou son environnement, par exemple dans un habitacle de voiture ou dans une tente. De plus, une gouttière 51 annulaire forme un creux permettant à l'utilisateur de reposer et stabiliser l'appareil 1 sur un verre ou une tasse, et ainsi procéder à l'infusion tout en limitant une projection de gouttelettes brûlantes et salissantes dues à l'écoulement de boisson sous pression.

Le couvercle 50 et la fermeture 53 comportent une partie supérieure sensiblement circulaire, puis qui comprend une jupe s'étendant le long de l'axe X sur un contour extérieur de la partie d'infusion 40. Cette jupe comprend les parties extérieure et intérieure du couvercle 50 : la partie extérieure comprend une forme permettant d'épouser la forme du corps 10 pour améliorer l'aspect de l'appareil d'infusion, tandis que la partie intérieure comprend l'organe d'accrochage 55.

La figure 5 représente une vue en coupe de la partie d'infusion 40 fixée au corps 10 de l'appareil 1. La partie d'infusion 40 est fixée au manchon 33 sur un contour intérieur du manchon 33, au niveau des organes d'accrochage 49 et 34, et la jupe 53 est fixée au manchon 33 sur un contour extérieur du manchon 33 au niveau des organes d'accrochage 35 et 55, de sorte que la jupe 53 enserre le corps 10 contre la partie d'infusion 40 via le manchon 33.

Le manchon 33 du corps 10 est fixé à la partie d'infusion 40 au niveau des organes d'accrochage 49 et 34, et la jupe 53 est fixée via le manchon 33 au corps 10 de sorte que le manchon 33 est enserré entre un contour extérieur de la partie d'infusion 40 et un contour intérieur de la jupe 53.

La liaison entre la jupe 53 et le manchon 33 s'effectue donc au niveau des organes d'accrochage 49 et 34 et entre le manchon 33 et la jupe 53 au niveau des organes d'accrochage 35 et 55.

La partie de préhension 48 de la partie d'infusion 40 formée sur une surépaisseur permet de former une butée afin d'assurer un assemblage correct. Le liquide issu du moyen de pressurisation 20 arrive verticalement par l'échappement du moyen de pressurisation 23 située sur un contour à l'extérieur du réservoir 30. Arrivée au niveau de la partie d'infusion 40, l'échappement 23 est connecté à un coude d'admission 24 débouchant sur le canal d'admission 46 formé entre le corps 10 et la partie d'infusion 40, permettant de rediriger radialement vers la partie d'infusion 40 le liquide issu verticalement de l'échappement du moyen de pressurisation 23. La butée de la partie de préhension 48 permet d'assurer un alignement correct entre le coude d'admission 24 et le canal d'admission 46 afin d'assurer la liaison hydraulique entre les deux pièces.

Le fonctionnement de l'appareil va maintenant être présenté.

La première opération à réaliser consiste à remplir le réservoir 30. Pour ce faire, en position de remplissage, l'appareil 1 est disposé verticalement avec l'orifice de remplissage du réservoir 30 situé vers le haut. Dans une telle situation, l'orifice de remplissage est libéré en dégageant la partie d'infusion 40, et est accessible à l'utilisateur. Une ouverture de section comparable à la section de l'appareil 1 est dégagée, et permet à l'utilisateur un remplissage notablement facilité. Une telle position permet ensuite en fixant la partie d'infusion 40 au corps 10 de procéder au remplissage de la chambre d'infusion 41 par une dosette 60 ou en remplissant directement du produit à infuser. Le couvercle 50 peut ensuite être fixé sur la partie d'infusion 40. L'utilisateur peut ainsi déclencher la commande de chauffe lorsqu'il souhaite préparer son infusion.

On peut alors lancer la préparation d'une tasse de café. Dans ce but, l'utilisateur commande d'abord le chauffage de l'eau en appuyant sur le bouton 89. Il place ensuite l'appareil en position d'infusion : l'appareil 1 est retourné par rapport à la position de remplissage : l'alignement des pièces est le même et la partie d'infusion 40 fixée au corps 10 est vers le bas. Dans cette position, un contenant peut être positionné sous l'appareil 1 en regard de la l'orifice de sortie 52 afin de recueillir la boisson infusée.

Lorsque le chauffage est terminé, l'utilisateur peut alors déclencher la commande de pressurisation 21 permettant de faire circuler l'eau chaude contenue dans le réservoir 30 vers la chambre d'infusion 41.

Un mode d'utilisation de l'appareil 1 est prévu pour faciliter les opérations à deux mains en minimisant l'utilisation d'outils ou supports extérieurs, afin d'être adapté à une utilisation nomade. L'utilisateur peut dévisser la partie d'infusion 40 afin de libérer l'ouverture du réservoir 30. Le large orifice du réservoir 30 facilite un remplissage du réservoir 30 par le moyen d'une bouteille d'eau ou d'une gourde contenant de l'eau tempérée ou chaude. Les indicateurs de niveau présents dans le réservoir 30 sont aisément visibles par la large ouverture et permettent à l'utilisateur de verser précisément une quantité adaptée d'eau. La partie d'infusion 40 peut être ensuite vissée sur le corps 10. Du simple fait de la mise en place et de la fixation de la partie d'infusion sur le corps par vissage, le conduit annulaire 43 est constitué, et est dès lors mécaniquement raccordé au conduit hydraulique issu du moyen de pressurisation 20. De plus, grâce au serrage des éléments d'étanchéité 44 et 45 contre le manchon 33, l'étanchéité est assurée entre la jupe 53 et le manchon 33.

La commande de chauffage 12 peut alors être enclenchée si l'appareil 1 fonctionne sur batterie, ou après avoir préalablement branché l'appareil 1 sur une alimentation. Ensuite, le couvercle 50 de la partie d'infusion 40 peut être retiré afin de dégager la chambre d'infusion 41, dans laquelle est introduite la dose de produit 60. Cette opération peut être réalisée avant l'opération de remplissage de la chambre d'infusion 41, afin de limiter le temps d'attente dû à la commande de chauffage 12. Une fois le couvercle 50 de la partie d'infusion 40 vissé et le chauffage terminé, l'utilisateur peut retourner l'appareil 1 en deuxième position d'utilisation, et procéder à l'infusion au-dessus d'une tasse ou d'une gourde.

Comme représenté dans la figure 5, en position d'infusion, l'eau du réservoir 30 est contenue sur le fond du réservoir 30 délimité par la partie d'infusion 40. La portion de la partie d'infusion 40 délimitant le réservoir 30 présente une inclinaison, permettant d'assurer l'écoulement de l'intégralité de l'eau contenue sur les extrémités extérieures du réservoir 30 en position d'infusion.

Une liaison hydraulique 22 d'admission du moyen de pressurisation connecte le réservoir à l'admission du moyen de pressurisation 20 (non représenté ici) et est situé en un point de cette extrémité inférieure du réservoir 30 afin de limiter l'eau résiduelle dans le réservoir 30 ne pouvant pas être pompée vers la chambre d'infusion 41. La liaison hydraulique 22 entre le réservoir et le moyen de pressurisation 20 verticale traverse le corps 10 le long du réservoir 30 pour entrer dans le moyen de pressurisation 20 situé sous le réservoir 30. Un échappement 23 du moyen de pressurisation 20 est vertical et situé à proximité de la liaison hydraulique d'admission du moyen de pressurisation 22, et rejoint l'admission de la chambre d'infusion 41 au moyen d'un coude d'admission 24.

Le fond du réservoir 30, correspondant à une surface de la partie d'infusion 40, n'est pas limité à un dévers allant du centre vers une extrémité extérieure. Le fond du réservoir 30 peut avoir toute forme permettant le ruissellement du liquide vers un même point, ou toute autre surface ne présentant pas de cols et permettant d'assurer l'écoulement de tout point du réservoir 30 vers ce point où sera positionné. Par exemple, dans le cas d'une fixation à baïonnette, le positionnement des encoches détermine l'orientation de la partie d'infusion 40 lorsqu'elle est fixée aux corps 10, et le fond du réservoir 30 peut avoir une forme sans propriétés de symétrie comme une symétrie de révolution.

Le canal d'admission de la chambre d'infusion 46 formé entre le corps 10 et la partie d'infusion 40 relie le coude d'admission 24 et une extrémité de la chambre d'infusion 41. Le canal d'admission 46 peut présenter une inclinaison selon l'axe X. Par exemple, le canal d'admission 46 peut être incliné de l'extérieur vers l'intérieur en direction de l'orifice de sortie 52. Cette configuration permet de réduire l'angle du coude d'admission 24, et ainsi réduire la perte de charge au niveau du coude d'admission 24. Au contraire, le canal d'admission 46 peut présenter une inclinaison de l'extérieur vers l'intérieur en direction opposée à l'orifice de sortie 52. De cette façon et une fois l'infusion terminée et l'appareil 1 en position de repos, l'inclinaison empêche des résidus de boisson infusée de refluer et polluer le circuit hydraulique.

Un filtre 54 est disposé sur une extrémité de la chambre d'infusion 41 par laquelle la boisson infusée s'écoule, entre la chambre d'infusion 41 et l'orifice de sortie 52, afin de permettre le passage de la boisson infusée en filtrant le produit à infuser.

Une extrémité inférieure de l'appareil 1 en position de repos comporte un tampon 16 permettant notamment de stabiliser l'appareil dans cette position.

## Revendications

1. Appareil de confection d'infusions (1) comportant un corps (10) allongé selon un axe principal (X), le corps (10) comprenant un réservoir (30) et un moyen de pressurisation (20), l'appareil comportant une partie d'infusion (40) comprenant une chambre d'infusion (41), la chambre d'infusion (41) étant configurée pour contenir une dose de produit (60) à infuser; l'appareil présentant deux positions d'utilisation, une position de remplissage dans laquelle l'axe principal (X) est sensiblement vertical, et un orifice de remplissage du réservoir (30) est vers le haut, la partie d'infusion étant à distance dudit orifice de manière à permettre le remplissage du réservoir ; et une position d'infusion dans laquelle l'axe principal (X) est sensiblement vertical et la partie d'infusion (40), fixée au corps, se trouve sous le réservoir, ferme l'orifice de remplissage du réservoir (30), et permet dans cette position la confection d'une infusion pendant laquelle l'infusion s'écoule par un orifice de sortie (52) situé en dessous de la chambre d'infusion (41) ; et l'appareil étant agencé de telle sorte qu'une liaison hydraulique permettant l'alimentation de la chambre d'infusion (41) par le moyen de pressurisation (20) est réalisée lors de la fixation au corps (10) de la partie d'infusion (40), l'appareil (1) **se caractérisant en ce que** la liaison hydraulique comprend au moins un conduit annulaire (43) formé entre la partie d'infusion (40) et le corps (10), et connecté à la chambre d'infusion (41).

2. Appareil de confection d'infusions (1) selon la revendication 1, dans lequel le conduit annulaire (43) est circulaire dans un plan perpendiculaire à l'axe principal (X).

3. Appareil de confection d'infusions (1) selon la revendication 1 ou 2, dans lequel le conduit annulaire (43) est connecté à la chambre d'infusion (41) par au moins un canal d'admission (46), notamment au moins deux canaux d'admission (46).

4. Appareil de confection d'infusion selon l'une quelconque des revendications 1 à 3, dans lequel la partie d'infusion (40) comprend une jupe (53) configurée pour enserrer un manchon (33) formé en partie supérieure du corps (10) contre un récipient (56) de la partie d'infusion (40), le récipient (56) étant un élément de la partie d'infusion (40) dans laquelle la partie inférieure de la chambre d'infusion (41) est agencée, et configuré pour recevoir la dose (60) de produit à infuser.

5. Appareil de confection d'infusion selon la revendication 4 et l'une quelconque des revendications 1 à 3, dans lequel le conduit annulaire (43) est agencé entre le manchon (33) et le récipient (56).

6. Appareil de confection d'infusions (1) selon l'une quelconque des revendications 1 à 5, configuré de telle sorte qu'en position d'infusion, le fond du réservoir (30) est incliné et/ou une entrée du moyen de pressurisation (20) est située sur une partie inférieure du réservoir (30).

7. Appareil de confection d'infusions (1) selon l'une quelconque des revendications 1 à 6, dans lequel la partie d'infusion (40) est déplaçable par rapport au corps (10) ; et l'appareil est configuré de telle sorte qu'en position de remplissage, la partie d'infusion (40) occupe une position dans laquelle l'orifice de remplissage du réservoir (30) est libéré.

8. Appareil de confection d'infusions (1) selon l'une quelconque des revendications 1 à 7, dans lequel le corps (10) et la partie d'infusion (40) sont configurés pour être fixés ensemble par vissage.

9. Appareil de confection d'infusions (1) selon la revendication 3 et l'une quelconque des revendications 4 à 8, dans lequel le dit au moins un canal d'admission (46) a une direction sensiblement radiale par rapport à l'axe principal (X) et inclinée vers le réservoir (30) en allant du canal vers la chambre d'infusion (41).

10. Appareil de confection d'infusions (1) selon l'une quelconque des revendications 1 à 9, comportant une entrée d'alimentation (19) et/ou un logement (17) pour un moyen de stockage d'énergie électrique, et configuré pour fonctionner avec des basses ou très basses tensions.

11. Appareil de confection d'infusions (1) selon l'une quelconque des revendications 1 à 10, comportant un régulateur de tension (18) connecté au moyen de pressurisation (20) pour assurer une pression constante lors de la pressurisation du réservoir (30).

12. Appareil de confection d'infusion selon l'une quelconque des revendications 1 à 11, dans lequel la chambre d'infusion (41) peut être détachée de la partie d'infusion (40).

## Patentansprüche

1. Gerät zur Herstellung von Aufgussgetränken (1), umfassend einen entlang einer Hauptachse (X) langgestreckten Körper (10), wobei der Körper (10) einen Tank (30) und ein Druckbeaufschlagungsmittel (20) umfasst, wobei das Gerät einen Aufgussteil (40) aufweist, welcher eine Aufgusskammer (41) umfasst, wobei die Aufgusskammer (41) dazu ausgelegt ist, eine Dosis eines aufzugießenden Produkts (60) zu enthalten,
wobei das Gerät zwei Gebrauchspositionen aufweist, eine Füllposition, in der die Hauptachse (X) im Wesentlichen vertikal verläuft und eine Öffnung zum Befüllen des Tanks (30) nach oben gerichtet ist, wobei der Aufgussteil sich in einem Abstand von der Öffnung befindet, um das Befüllen des Tanks zu ermöglichen, sowie eine Aufgussposition, in der die Hauptachse (X) im Wesentlichen vertikal verläuft und der an dem Körper befestigte Aufgussteil (40) sich unter dem Tank befindet, die Öffnung zum Befüllen des Tanks (30) verschließt und in dieser Position die Zubereitung eines Aufgussgetränkes ermöglicht, während derer das Aufgussgetränk durch eine unterhalb der Aufgusskammer (41) befindliche Auslassöffnung (52) fließt, und
wobei das Gerät so angeordnet ist, dass während des Befestigens des Aufgussteils (40) an dem Körper (10) eine hydraulische Verbindung hergestellt wird, welche die Versorgung der Aufgusskammer (41) durch das Druckbeaufschlagungsmittel (20) ermöglicht,
wobei das Gerät **dadurch gekennzeichnet ist, dass** die hydraulische Verbindung wenigstens eine ringförmige Leitung (43) umfasst, die zwischen dem Aufgussteil (40) und dem Körper (10) gebildet und mit der Aufgusskammer (41) verbunden ist.

2. Gerät zur Herstellung von Aufgussgetränken (1) nach Anspruch 1, bei dem die ringförmige Leitung (43) in einer Ebene senkrecht zur Hauptachse (X) kreisförmig ist.

3. Gerät zur Herstellung von Aufgussgetränken (1) nach Anspruch 1 oder 2, bei dem die ringförmige Leitung (43) mit der Aufgusskammer (41) durch wenigstens einen Einlasskanal (46), insbesondere wenigstens zwei Einlasskanäle (46), verbunden ist.

4. Gerät zur Herstellung von Aufgussgetränken nach einem der Ansprüche 1 bis 3, bei dem der Aufgussteil (40) eine Schürze (53) umfasst, die dazu ausgelegt ist, eine im oberen Teil des Körpers (10) ausgebildete Manschette (33) gegen einen Behälter (56) des Aufgussteils (40) einzuspannen, wobei der Behälter (56) ein Element des Aufgussteils (40) ist, in dem der untere Teil der Aufgusskammer (41) angeordnet ist, und dazu ausgelegt ist, die Dosis (60) eines aufzugießenden Produkts aufzunehmen.

5. Gerät zur Herstellung von Aufgussgetränken nach Anspruch 4 und einem der Ansprüche 1 bis 3, bei dem die ringförmige Leitung (43) zwischen der Manschette (33) und dem Behälter (56) angeordnet ist.

6. Gerät zur Herstellung von Aufgussgetränken (1) nach einem der Ansprüche 1 bis 5, das derart ausgelegt ist, dass in der Aufgussposition der Boden des Tanks (30) geneigt ist und/oder ein Einlass des Druckbeaufschlagungsmittels (20) sich an einem unteren Teil des Tanks (30) befindet.

7. Gerät zur Herstellung von Aufgussgetränken (1) nach einem der Ansprüche 1 bis 6, bei dem der Aufgussteil (40) relativ zum Körper (10) bewegbar ist, und das Gerät so ausgelegt ist, dass der Aufgussteil (40) in der Füllposition eine Position einnimmt, in der die Öffnung zum Befüllen des Tanks (30) freigegeben ist.

8. Gerät zur Herstellung von Aufgussgetränken (1) nach einem der Ansprüche 1 bis 7, bei dem der Körper (10) und der Aufgussteil (40) dazu ausgelegt sind, durch Verschrauben aneinander befestigt zu werden.

9. Gerät zur Herstellung von Aufgussgetränken (1) nach Anspruch 3 und einem der Ansprüche 4 bis 8, bei dem der wenigstens eine Einlasskanal (46) eine im Wesentlichen radiale Richtung in Bezug auf die Hauptachse (X) aufweist und vom Kanal zur Aufgusskammer (41) verlaufend zum Tank (30) hin geneigt ist.

10. Gerät zur Herstellung von Aufgussgetränken (1) nach einem der Ansprüche 1 bis 9, das einen Zuführeinlass (19) und/oder eine Aufnahme (17) für ein Mittel zum Speichern von elektrischer Energie umfasst und das dazu ausgelegt ist, mit niedrigen oder sehr niedrigen Spannungen zu funktionieren.

11. Gerät zur Herstellung von Aufgussgetränken (1) nach einem der Ansprüche 1 bis 10, das einen Spannungsregler (18) umfasst, der mit dem Druckbeaufschlagungsmittel (20) verbunden ist, um einen konstanten Druck während der Druckbeaufschlagung des Tanks (30) sicherzustellen.

12. Gerät zur Herstellung von Aufgussgetränken nach einem der Ansprüche 1 bis 11, bei dem die Aufgusskammer (41) von dem Aufgussteil (40) gelöst werden kann.

## Claims

1. An apparatus for making infusions (1) including a body (10) elongated along a main axis (X), the body (10) comprising a reservoir (30) and a pressurization means (20), the apparatus including an infusion part (40) comprising an infusion chamber (41), the infusion chamber (41) being configured to contain a dose of product (60) to be infused;
the apparatus having two positions of use, a filling position in which the main axis (X) is substantially vertical, and an orifice for filling the reservoir (30) is upwards, the infusion section being at a distance from said orifice so as to allow the filling of the reservoir; and
an infusion position in which the main axis (X) is substantially vertical and the infusion section (40), fixed to the body, is located under the reservoir, closes the filling orifice of the reservoir (30), and allows making in this position an infusion during which the infusion flows through an outlet orifice (52) located below the infusion chamber (41); and
the apparatus being arranged such that a hydraulic connection allowing the supply of the infusion chamber (41) by the pressurization means (20) is made during the fixing of the infusion section (40) to the body (10), and
the apparatus being **characterized in that** the hydraulic connection comprises at least one annular duct (43) formed between the infusion section (40) and the body (10), and connected to the infusion chamber (41).

2. The apparatus for making infusions (1) according to claim 1, wherein the annular duct (43) is circular in a plane perpendicular to the main axis (X).

3. The apparatus for making infusions (1) according to claim 1 or 2, wherein the annular duct (43) is connected to the infusion chamber (41) by at least one intake channel (46), in particular at least two intake channels (46).

4. The apparatus for making infusions according to any one of claims 1 to 3, wherein the infusion section (40) comprises a skirt (53) configured to enclose a sleeve (33) formed at the top of the body (10) against a container (56) of the infusion section (40), the container (56) being an element of the infusion section (40) in which the lower section of the infusion chamber (41) is arranged and configured to receive the dose (60) of product to be infused.

5. The apparatus for making infusions according to claim 4 and any one of claims 1 to 3, wherein the annular duct (43) is arranged between the sleeve (33) and the container (56).

6. The apparatus for making infusions (1) according to any one of claims 1 to 5, configured such that in the infusion position, the bottom of the reservoir (30) is inclined and/or an inlet of the pressurization means (20) is located on a lower section of the reservoir (30).

7. The apparatus for making infusions (1) according to any one of claims 1 to 6, wherein the infusion section (40) is movable relative to the body (10); and the apparatus is configured such that in the filling position, the infusion section (40) occupies a position in which the filling orifice of the reservoir (30) is released.

8. The apparatus for making infusions (1) according to any one of claims 1 to 7, wherein the body (10) and the infusion section (40) are configured to be fixed together by screwing.

9. The apparatus for making infusions (1) according to claim 3 and any one of claims 4 to 8, wherein said at least one intake channel (46) has a substantially radial direction with respect to the main axis (X) and inclined towards the reservoir (30) going from the channel towards the infusion chamber (41).

10. The apparatus for making infusions (1) according to any one of claims 1 to 9, including a supply inlet (19) and/or a housing (17) for an electrical energy storage means, and configured to operate with low or very low voltages.

11. The apparatus for making infusions (1) according to any one of claims 1 to 10, including a voltage regulator (18) connected to the pressurization means (20) to ensure a constant pressure during the pressurization of the reservoir (30).

12. The apparatus for making infusions according to any one of claims 1 to 11, wherein the infusion chamber (41) is detachable from the infusion section (40).
